# EUROPEAN PATENT APPLICATION

(11) **EP 3 686 542 A1**
(43) Date of publication of application: **29.07.2020**
(21) Application number: 19162994.8
(22) Date of filing: 14.03.2019
(51) Int. Cl.: F41B 5/14, G01B 5/252, G01B 7/312

(54) **ARROW SHAFT TEST APPARATUS**

(30) Priority: 24.01.2019 KR 20190009105
(71) Applicant: Song, Yun Il, Busan 46539 (KR); Song, Yun Sub, Busan 49515 (KR); Song, Yoon Jae, Busan 49515 (KR)
(72) Inventor: Song, Yun Il, Busan 46539 (KR); Song, Yun Sub, Busan 49515 (KR); Song, Yoon Jae, Busan 49515 (KR)
(74) Representative: Vossius & Partner Patentanwälte Rechtsanwälte mbB

(57) **Abstract**

The present disclosure relates to an arrow shaft test apparatus, and in particular, includes a measuring machine body disposed lengthily in the left and right directions, a pair of arrow seating parts provided on the upper end of the measuring machine body, and disposed to be spaced at a predetermined distance apart from each other in the left and right directions, and a measuring sensor unit fixed to the measuring machine body, and for measuring the spacing distance forming with any outer circumferential surface of a shaft seated in the pair of arrow seating parts, thereby improving the accuracy rate for the target by allowing an archer to measure one or more among the straightness, the spine, the overlap, and the weight of the shaft serving as an important factor when selecting the arrow in use.

## Description

### BACKGROUND OF THE DISCLOSURE

### Field of the Disclosure

The present disclosure relates to an arrow shaft test apparatus.

### Description of Related Art

In general, an arrow is composed of a shaft, an arrowhead mounted on the front end portion of the shaft to hit a target, a nock mounted on the rear end portion of the shaft to receive thrust from a bowstring, and a vane for guiding the flight direction of a bow.

The arrow goes through a paradox phenomenon when flying from the bowstring toward the target. The paradox refers to a phenomenon that the arrow flies while bending to the left and the right in the initial stage of flight immediately after leaving the bow.

This is because the kinetic energy is instantaneously transmitted to the arrow as a string goes out like a stationary arrow when the arrow is released, such that the shaft is unable to withstand this force, thereby repetitively performing the procedure that the shaft is bent from the pressure point (center of gravity), returns back to the original state by the restoring force of the elastic shaft, and is bent to the opposite by the inertia energy.

In particular, in the paradox phenomenon, the straightness, the spine, the overlap, and the weight of the shaft together with the strength of the shaft serve as a very important factor. Therefore, it is important for an archer to select an arrow having a shaft of the strength suitable for the thrust transmitted through the bowstring.

However, there is a problem in that conventionally, when manufacturing the shaft, only the manufacturer measures the shaft and marks the specifications on each arrow, and since an arrow shaft test apparatus that the archer may individually use for measurement is insufficient, the archer may not accurately recognize the state that is deformed as it uses the arrow, thereby lowering the accuracy rate for the target.

In addition, there is a problem in that the arrow shaft test apparatus for individual should have the size of at least the length of the arrow or more, such that it is inconvenient to carry, thereby greatly lowering the usability.

### SUMMARY OF THE DISCLOSURE

The present disclosure is intended to solve the above problems, and an object of the present disclosure is to provide an arrow shaft test apparatus, which may allow an archer to measure one or more among the straightness, the spine, the overlap, the weight, and the outer diameter of a shaft serving as an important factor when selecting the arrow in use individually, thereby improving the accuracy rate for the target.

In addition, another object of the present disclosure is to provide an arrow shaft test apparatus, which may separate and assemble so that the archer individually carries it easily.

An embodiment of an arrow shaft test apparatus according to the present disclosure includes a measuring machine body disposed lengthily in the left and right directions; a pair of arrow seating parts provided on the upper end of the measuring machine body, and disposed to be spaced at a predetermined distance apart from each other in the left and right directions; and a measuring sensor unit fixed to the measuring machine body, and for measuring the spacing distance forming with any outer circumferential surface of a shaft seated in the pair of arrow seating parts.

Herein, the measuring machine body may have a guide rail formed thereon so that the pair of arrow seating parts is slidably moved in the left and right directions.

In addition, the measuring machine body may have a ruler attached thereto in order to determine the spacing distance between the pair of arrow seating parts.

In addition, the pair of arrow seating parts may include a sliding block provided to be slidably moved in the left and right directions along the upper end surface of the measuring machine body and a pair of shaft seating plates provided in an installing groove formed on the upper portion of the sliding block, and having a rotary shaft that is horizontal in the longitudinal direction of the measuring machine body.

In addition, the pair of shaft seating plates may be provided to be rotatable by an adjusting screw provided at one side thereof by a measurer.

In addition, the measuring sensor unit may be composed of a proximity sensor for measuring the distance between itself and any outer circumferential surface of the shaft.

In addition, the measuring sensor unit may be provided so that the weight of the shaft itself seated in the arrow seating part or the outer diameter of the shaft may be measured.

In addition, the measuring sensor unit may continuously measure the spacing distance between itself and any outer circumferential surface of the shaft while axially rotating the shaft in the state seated in the pair of arrow seating parts.

In addition, the arrow shaft test apparatus may further include a weight block for applying the load of a predetermined weight to any portion of the shaft seated in the pair of arrow seating parts.

In addition, the weight block may have a hook part, which has a hook groove hooked on the shaft formed therein, prepared at the upside thereof.

In addition, a weight adding groove concavely formed to open the upside thereof so that the weight block is vertically moved may be provided in the measuring machine body, and the arrow shaft test apparatus may further include an elevating part disposed in the weight adding groove and for supporting the vertical movement of the weight block.

In addition, the elevating part may include a horizontal supporting plate in which the weight block is seated; a guiding plate vertically bent at both ends of the horizontal supporting plate, a coupling plate bent outwardly and horizontally at the front end of the guiding plate and a vertical guide rod provided to vertically pass through the measuring machine body on the lower surface of the coupling plate.

In addition, the arrow shaft test apparatus may further include a load adding part for hooking or releasing the weight block seated in the elevating part on the shaft.

In addition, the load adding part may include an elevating cam having the rotary shaft horizontally passing through the measuring machine body corresponding to the lower portion of the weight adding groove, and having an outer circumferential surface having the circumference eccentric with respect to the rotary shaft, an elevating lever extended from the rotary shaft of the elevating cam, and extended to one side in order to rotate the elevating cam and a stopper for preventing one directional over-rotation of the elevating cam.

In addition, the measuring sensor unit may measure the spacing distance between itself and any outer circumferential surface of the shaft of the state, which has been stopped in the state where the load of the weight block has been applied to the shaft of the state seated in the pair of arrow seating parts.

In addition, the measuring sensor unit may continuously measure the spacing distance between itself and any outer circumferential surface of the shaft while axially rotating the shaft in the state where the load of the weight block has been applied to the shaft of the state seated in the pair of arrow seating parts.

In addition, the measuring machine body may include a central body to which the measuring machine unit is coupled and a wing body provided on both end portions of the central body so that the arrow seating part is provided therein, and the wing body may be provided to be separated or assembled with respect to the central body.

According to an embodiment of the arrow shaft test apparatus according to the present disclosure, the following various effects may be achieved.

Firstly, it is possible to precisely measure the straightness of the shaft while axially rotating the shaft.

Secondly, it is possible to measure the spine that is the deflection amount obtained by hooking the weight block having a predetermined weight on the shaft, thereby easily selecting the arrow having the strength individually suitable for the archer.

Thirdly, it is possible to measure the overlap of the shaft while axially rotating the shaft in the state where the load of the weight block having a predetermined weight has been added to the shaft, thereby selecting the arrow manufactured with high quality.

Fourthly, it is possible to provide so that the wing body may be separated and assembled with respect to the central body thereof, thereby improving the portability of the individual archer, and easily measuring the point or the nock portion of both ends of the shaft as well as the central portion of the shaft.

### BRIEF DESCRIPTION OF THE DRAWINGS

FIG. 1 is a perspective diagram illustrating one embodiment of an arrow shaft test apparatus according to the present disclosure.
FIG. 2 is a plane diagram of FIG. 1, and is a front diagram illustrating the state where the load of a weight block has not been added to a shaft.
FIG. 3 is a plane diagram of FIG. 1, and is a front diagram illustrating the state where the load of the weight block has been added to the shaft.
FIG. 4 is a front diagram illustrating the modified example of FIG. 3.
FIG. 5 is a conceptual diagram for explaining the straightness of the shaft according to FIG. 2.
FIG. 6 is a conceptual diagram for explaining the spine and the overlap of the shaft according to FIG. 3.
FIGS. 7 and 8 are a front exploded diagram illustrating still another embodiment of the arrow shaft test apparatus according to the present disclosure and a front diagram illustrating the use example thereof.

### DESCRIPTION OF SPECIFIC EMBODIMENTS

Hereinafter, an embodiment of an arrow shaft test apparatus according to the present disclosure will be described in detail with reference to the accompanying drawings. It should be noted that in denoting the reference numerals to the components in each drawing, the same components are denoted by the same reference numerals as possible even though they are illustrated in different drawings. In addition, in describing an embodiment of the present disclosure, a detailed description of related known configurations or functions will be omitted when it is determined to obscure the understanding of an embodiment of the present disclosure.

In describing the components of an embodiment of the present disclosure, terms such as first, second, A, B, (a), and (b) may be used. These terms are intended to distinguish the component from other components, and the nature, the sequence, the order, or the like of the corresponding components is not limited by the terms. In addition, unless otherwise defined, all terms used herein, including technical or scientific terms, have the same meaning as commonly understood by one of ordinary skill in the art to which this disclosure pertains. Terms such as those defined in commonly used dictionaries should be interpreted as having a meaning consistent with the meaning in the context of the relevant art and are to be interpreted in an idealized or overly formal sense unless explicitly so defined in the present application.

Throughout the specification, when a certain portion "includes" or "comprises" a certain component, it means that the other components are excluded, but may be further included unless specifically described otherwise.

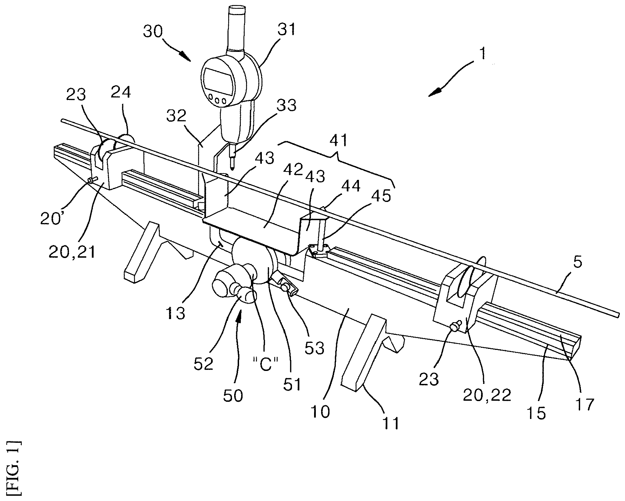

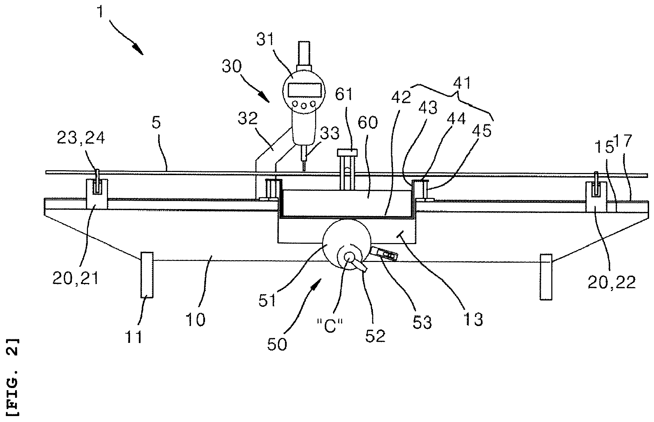

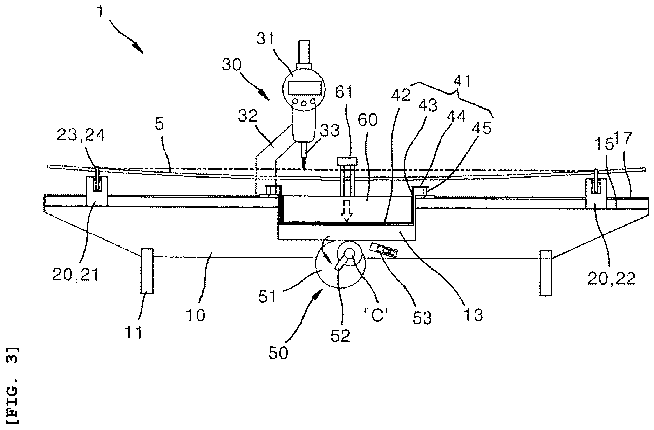

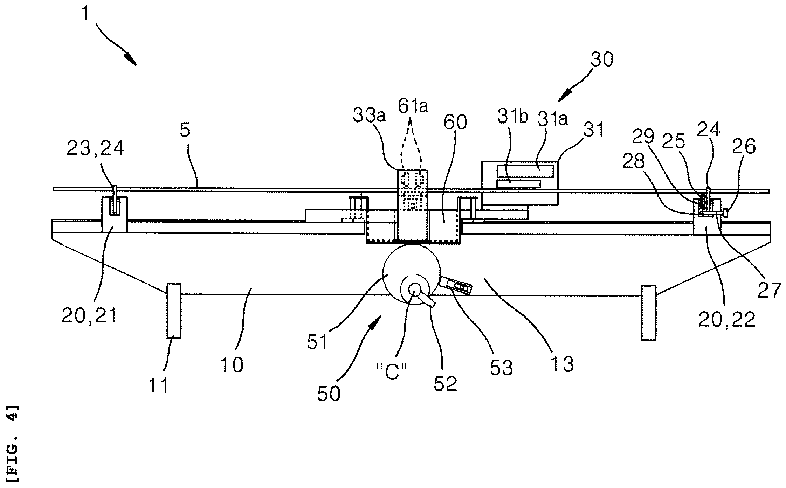

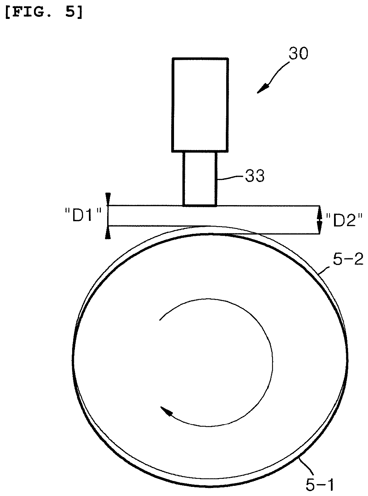

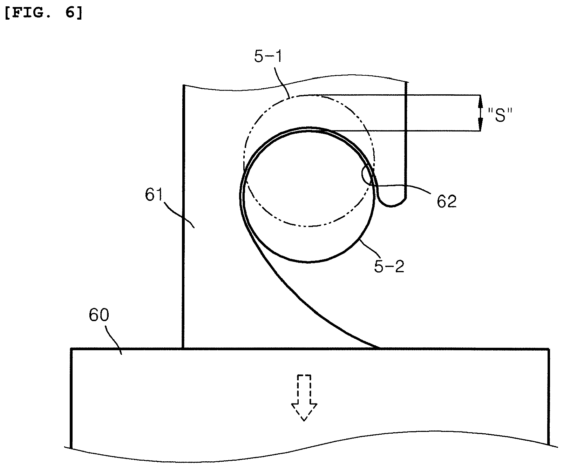

FIG. 1 is a perspective diagram illustrating one embodiment of an arrow shaft test apparatus according to the present disclosure, FIG. 2 is a plane diagram of FIG. 1, and is a front diagram illustrating the state where the load of a weight block has not been added to a shaft, FIG. 3 is a plane diagram of FIG. 1, and is a front diagram illustrating the state where the load of the weight block has been added to the shaft, FIG. 4 is a front diagram illustrating the modified example of FIG. 3, FIG. 5 is a conceptual diagram for explaining the straightness of the shaft according to FIG. 2, and FIG. 6 is a conceptual diagram for explaining the spine and the overlap of the shaft according to FIG. 3.

As illustrated in FIGS. 1 to 6, one embodiment 1 of an arrow shaft test apparatus according to the present disclosure includes a measuring machine body 10 disposed lengthily in the left and right directions, a pair of arrow seating parts 20 provided on the upper end of the measuring machine body 10, and disposed to be spaced at a predetermined distance apart from each other in the left and right directions, and a measuring sensor unit 30 fixed to the measuring machine body 10, and for measuring the spacing distance forming with any outer circumferential surface of a shaft 5 seated in the pair of arrow seating parts 20.

Herein, as illustrated in FIGS. 1 and 2, the measuring machine body 10 may have a trapezoidal shape whose length of the upper side is formed to be longer than the length of the lower side, and a leg part 11 may be prepared at both left and right sides of the lower end portion thereof, respectively.

The measuring machine body 10 is a configuration for forming the entire skeleton of one embodiment 1 of the arrow shaft test apparatus according to the present disclosure, and may be provided as a weight body having the weight of such a degree that is not moved when the load of a weight block 60, which will be described later, is added thereto.

The center of the upper end portion of the measuring machine body 10 may have an upside opened therein, and have a weight adding groove 13 concavely formed in a substantially '⊏' shape. The weight adding groove 13 may add or release the load by hooking or releasing with respect to the shaft 5 provided on the upper portion thereof while the weight block 60, which will be described later, vertically moves.

Meanwhile, the shaft 5 that is a measuring target may be seated in the pair of arrow seating parts 20. The shaft 5 may have one side end portion (the left side end portion in the drawing) and the other side end portion (the right side end portion in the drawing) seated in an arrow seating part 21 provided at the left side thereof and an arrow seating part 22 provided at the right side thereof, respectively.

Herein, the pair of arrow seating parts 20 may be fixed to the upper end portion of the measuring machine body 10 by a fixing screw 20' in order to generally have the spacing distance of 28 inches for measuring the straightness, the spine, and the overlap of the shaft 5 more accurately, as will be described later.

A ruler 17 may be attached to the upper end surface of the measuring machine body 10 so that a measurer may determine the spacing distance between the pair of arrow seating parts 20 more accurately.

As illustrated in FIGS. 1 and 2, the pair of arrow seating parts 20 may include sliding blocks 21, 22 provided to be slidably moved in the left and right directions along the upper end surface of the measuring machine body 10, and a pair of shaft seating plates 23, 24 provided in an installing groove formed on the upper portions of the sliding blocks 21, 22, and having rotary shaft that is horizontal in the longitudinal direction of the measuring machine body 10.

The sliding blocks 21, 22 may slidably move in the left and right directions along a guide rail 15 provided on the upper end portion of the measuring machine body 10. More specifically, the sliding blocks 21, 22 slidably moves in the left and right directions along the guide rail 15 on the upper end portion of the measuring machine body 10, and as described above, may be fixed by the fixing screw 20' at the position where the distance between one side end portion and the other side end portion of the shaft 5 supported by the shaft seating plates 23, 24 becomes 28 inches.

Meanwhile, the pair of shaft seating plates 23, 24 is formed in a disc shape, respectively, may have a part of the surfaces overlapped with each other in the left and right directions, and may be provided to freely rotate mutually with respect to the rotary shaft thereof. The shaft 5 is seated and supported on the upper end portion of the portion where the pair of shaft seating plates 23, 24 is overlapped with each other to guide the rotation thereof when a measurer axially rotates the shaft 5 to one side or the other side thereof.

However, when a measurer directly holds the shaft 5 and axially rotates it to one side or the other side thereof, an error may occur in the measured value due to any external force transmitted by the measurer.

For example, as will be described later, another embodiment of the arrow shaft test apparatus according to the present disclosure may measure the weight of the shaft 5 itself through the measuring sensor unit 30, which will be described later, and it is difficult to accurately measure the weight of the shaft 5 when a measurer applies any force thereto in the gravitational direction while rotating the shaft 5.

As illustrated in FIG. 4, in another embodiment of the present disclosure, in order to prevent the error of the weight measurement as described above, any one of the pair of arrow seating parts (see the right arrow seating part 22 in FIG. 4) may be rotation-adjusted around a rotary shaft 27 that is horizontal with the pair of arrow seating plates 23, 24, a driving pulley 28 is provided on the end portion of the rotary shaft 27, and another embodiment of the present disclosure may further include an adjusting screw 26 separately disposed in parallel with one side of any one of the pair of arrow seating plates 23, 24, a driven pulley 25 provided at one side to be coaxially rotated in interlock with each of the pair of arrow seating plates 23, 24, and a driving belt 29 wound on the driving pulley 28 and the driven pulley 25 to transmit the entire rotational force of the adjusting screw 26 to the pair of arrow seating plates 23, 24.

Herein, the driven pulley 25 is not necessarily formed on the pair of arrow seating plates 23, 24, respectively, and is formed only on any one of the pair of the arrow seating plates 23, 24, and although not illustrated in the drawing, it may be of course configured for the pair of arrow seating plates 23, 24 to interlock with each other in a mutual gear engagement manner to rotate the shaft 5 in the same direction.

Therefore, a measurer may rotate the shaft 5 simply by rotating the adjusting screw 26 in one side direction or the other side direction without applying any gravitational directional force to the shaft 5 itself, thereby improving the accuracy for the measurement. Meanwhile, as illustrated in FIGS. 1 and 2, the measuring sensor unit 30 may be composed of a proximity sensor for measuring the distance between itself and any outer circumferential surface of the shaft 5.

More specifically, the measuring sensor unit 30 may continuously measure the spacing distance between itself and any outer circumferential surface of the shaft 5 while axially rotating the shaft 5 of the state seated in the pair of arrow seating parts 20.

For this purpose, as illustrated in FIGS. 1 and 2, the measuring sensor unit 30 may include an instrument part 31 for externally displaying a measured value, a connecting bar 32 for connecting the instrument part 31 to the measuring machine body 10, and a gauge part 33 provided on the lower end portions of the connecting bar 32 and the instrument unit 32, and for measuring the spacing distance between itself and any outer circumferential surface of the shaft 5.

The gauge part 33 may vertically move by a predetermined distance downwardly from the instrument part 31 for accurately measuring the straightness, the spine, and the overlap of the shaft 5.

However, the gauge part 33 is not necessarily required to measure the straightness of the shaft 5, and the like while vertically moving by a predetermined distance downwardly from the instrument part 31.

That is, as illustrated in FIG. 4, the gauge part 33a is provided in a pair at the front and the rear of the shaft 5, and may also be provided to measure the straightness, the spine, and the overlap of the shaft 5 as described above.

In addition, the measuring sensor unit 30 among the configurations of the arrow shaft test apparatus according to one embodiment of the present disclosure illustrated in FIGS. 1 to 3 is provided to measure only the straightness, the spine, and the overlap of the shaft 5, but as illustrated in FIG. 4, may be provided to also measure the weight of the shaft 5 itself.

More specifically, in another embodiment of the arrow shaft test apparatus according to the present disclosure, as illustrated in FIG. 4, the measuring sensor unit 30 may be designed to measure the weight of the shaft 5 itself seated in the arrow seating part 20.

Therefore, unlike the above-described one embodiment, the instrument part 31 may further include a separate weight instrument panel 31a so that the measured weight of the shaft 5 may be displayed in numbers or the like, and a measurer may visually confirm the spacing distance forming with the shaft 5 through an existing measuring instrument panel 31b.

In addition, according to another embodiment of the arrow shaft test apparatus according to the present disclosure, unlike the above-described one embodiment, it is of course possible to also measure the outer diameter of the shaft 5 through the measuring sensor unit 30.

That is, the gauge part 33a is provided in a pair at the front and the rear of the shaft 5, respectively, and it is possible to calculate the outer diameter through not only the spacing distance spaced apart from any one of the gauge parts 33a, but also the spacing distance measured from the respective gauge parts 33a.

One embodiment and another embodiment of the arrow shaft test apparatus according to the present disclosure may measure the straightness, the spine, and the overlap of the shaft 5, and the weight of the shaft 5 through the measuring sensor unit 30 composed of the above-described configuration.

Herein, the straightness of the shaft 5 may measure the spacing distance between the front end of the gauge part 33 of the measuring sensor unit 30 and any outer circumferential surface of the shaft 5, and may be defined by the deviation of the value measured while axially rotating the shaft 5 in one side or the other side direction in the state where the shaft 5 has been seated in the pair of arrow seating parts 20.

That is, when the deviation is large, the straightness of the shaft 5 is relatively low, and when the deviation is small, the straightness of the shaft 5 is relatively high, such that it may be evaluated as the shaft 5 having good quality.

In addition, the spine of the shaft 5 may be defined by the distance that is deflected when a predetermined load is added to the shaft 5 of the state seated in the pair of arrow seating parts 20. This will be described later in more detail.

Finally, the overlap of the shaft 5 means the circumferential deviation of the spine. That is, it means the deviation of the value measured while axially rotating the shaft 5 in the same manner as the method for measuring the straightness of the shaft 5 in the state where a predetermined load has been added to the shaft 5 in order to measure the spine of the shaft 5. A method for measuring the overlap of the shaft 5 will also be described later in more detail.

As described above, the reason for measuring the straightness, the spine, and the overlap of the shaft 5 is as follows.

That is, as the arrow has the shaft 5 with good straightness, it is possible to form the repeatability for the target (i.e., a good shoot group) when any archer pulls and releases the bowstring toward the target by applying the same force thereto. On the contrary, in case of the arrow with the shaft 5 having bad straightness, the repeatability for the target is remarkably reduced, such that it is very disadvantageous to form the shoot group even if the same archer provides the thrust of the same force.

In addition, the size of the spine of the shaft 5 is an important factor for varying the accuracy rate for the final target due to the pulling force of the bowstring, which varies for each archer. That is, when the pulling force of the bowstring of any archer is relatively smaller than that of other archers, the greater the spine, the higher the accuracy rate, while in case of the archer with relatively greater pulling force of the bowstring, the smaller the spine, the higher the accuracy rate.

Meanwhile, the overlap of the shaft 5 refers to the circumferential deviation of the spine as described above, and the left and right swing range of the shaft 5 released by the bowstring (so-called, a paradox phenomenon) is determined according to whether a cork vane becoming a reference vane among the arrow vanes is fixed to any portion of the outer circumferential surface of the shaft 5 having the respective different overlaps. As is well known, the paradox phenomenon is caused by the strength of the shaft 5, and is an important factor affecting the durability according to the frequency of use of the arrow.

One embodiment 1 of the arrow shaft test apparatus according to the present disclosure does not measure the weight of the arrow itself as an important factor relevant to the vertical swing of the released arrow, but it should be noted that it is also possible to improve so that the arrow seating part 20 may sense the weight of the shaft 5.

As described above, one embodiment 1 of the arrow shaft test apparatus according to the present disclosure may be carried by the archer who is a user, and the archer may select and release an optimal arrow suitable for himself/herself by directly measuring the straightness, the spine, and the overlap of the arrow owned by himself/herself in the field including an archery field, thereby improving the accuracy rate for the target.

As illustrated in FIGS. 1 to 3, one embodiment 1 of the arrow shaft test apparatus according to the present disclosure may further include the weight block 60 for applying the load of a predetermined weight to any portion of the shaft 5 seated in the pair of arrow seating parts 20.

The weight block 60 is a load added to the shaft 5 for measuring the spine and the overlap of the shaft 5 seated in the pair of arrow seating parts 20, and assuming that the spacing distance between one side end portion and the other side end portion of the shaft 5 seated in the pair of arrow seating parts 20 is 28 inches, it is preferable to be set to 880g or more.

In addition, a hook part 61 having a hook groove 62 hooked on the shaft 5 formed therein may be prepared on the upside of the weight block 60. The weight block 60 and the hook part 61 may be integrally provided, but the hook part 61 may also be prepared as a separate member to be coupled to the weight block 60. The shape of the hook groove 62 may be formed in an arc shape having a diameter of such a degree to be hooked on the shaft 5.

Meanwhile, as illustrated in FIG. 4, when the gauge part 33a is provided in a pair at the front and the rear of the shaft 5, respectively, a hook part 61a may be designed so that the pair is spaced apart from each other to be sensed through therebetween in order to facilitate the sensing by the sensor.

In addition, one embodiment 1 of the arrow shaft test apparatus according to the present disclosure may further include an elevating part disposed in the weight adding groove 13 to support the vertical movement of the weight block 60.

More specifically, as illustrated in FIG. 1, the elevating part may include a horizontal supporting plate in which the weight block 60 is seated, a guiding plate vertically bent at both ends of the horizontal supporting plate and upwardly extended in parallel with both side walls of the weight adding groove 13, a coupling plate bent outwardly and horizontally at the front end of the guiding plate, respectively, and a vertical guide rod 45 provided to vertically pass through the measuring machine body 10 on the lower surface of the coupling plate.

The elevating part vertically moves the weight block 60 in the weight adding groove 13 according to an operation of a load adding part 50, which will be described later, in the state where the weight block 60 has been seated therein. At this time, the vertical guide rod 45 connected to the coupling plates provided at the left and right both ends thereof may guide the stable vertical movement of the elevating part while vertically passing through the measuring machine body 10, respectively.

Meanwhile, one embodiment 1 of the arrow shaft test apparatus according to the present disclosure may further include the load adding part 50 for hooking or releasing the weight block 60 seated in the elevating part on the shaft 5.

As illustrated in FIGS. 1 to 3, the load adding part 50 has the rotary shaft for horizontally passing through the measuring machine body 10 corresponding to the lower portion of the weight adding groove 13, and may include an elevating cam 51 having the outer circumferential surface having the circumference eccentric with respect to the rotary shaft, an elevating lever 52 extended from the rotary shaft of the elevating cam 51, and extended to one side in order to rotate the elevating cam 51, and a stopper 53 for preventing one directional over-rotation of the elevating cam 51.

The elevating cam 51 is in close contact with the front end surface of the measuring machine body 10 and is provided in a pair that is in close contact with the rear end surface side of the measuring machine body 10, and may vertically elevate the elevating part supported on the outer circumferential surface according to the rotation operation of the elevating lever 52.

More specifically, as illustrated in FIG. 2, the elevating cam 51 may maintain the state where the hook groove 62 formed in the hook part 61 of the weight block 60 has been upwardly spaced apart from the shaft 5 by upwardly supporting the lower surface of the horizontal supporting plate among the elevating part of the state where the weight block 60 has been seated therein.

At this time, a part of the outer circumferential surface of the elevating cam 51 may be supported by the stopper 53 in order not to be descended arbitrarily, thereby preventing the weight block 60 from adding a sudden load to the shaft 5 due to the sudden descent thereof.

Then, as illustrated in FIG. 3, when the elevating cam 51 is eccentrically rotated by rotating the elevating lever 52 in the direction opposite to the direction in which the stopper 53 has been disposed, the horizontal supporting plate of the elevating part eccentrically supported by the outer circumferential surface of the elevating cam 51 is descended.

At this time, the hook groove 62 of the hook part 61 provided on the weight block 60 is gradually hooked on the shaft 5, and a load may be gradually added to any portion of the outer circumferential surface of the shaft 5 in response to the RPM of the elevating lever 52.

As described above, when the weight of the weight block 60 is added to the shaft 5 as a predetermined load, it is possible to measure the amount of the shaft 5 deflected by the load, that is, the spine by using the state where the load has not been added thereto as a reference point through the measuring sensor unit 30.

That is, the measuring sensor unit 30 may measure the spine that is the spacing distance between itself and any outer circumferential surface of the shaft 5 of the state, which has been stopped in the state where the load of the weight block 60 has been applied to the shaft 5 of the state seated in the pair of arrow seating parts 20.

In addition, the measuring sensor unit 30 may measure the overlap defined as the circumferential deviation of the spine by continuously measuring the spacing distance between itself and any outer circumferential surface of the shaft 5 while axially rotating the shaft 5 in the state where the load of the weight block 60 has been applied to the shaft 5 of the state seated in the pair of arrow seating parts 20.

A process of measuring the straightness, the spine, and the overlap of the shaft 5 by using the arrow shaft 5 test apparatus according to the present disclosure configured as described above will be briefly described with reference to the accompanying drawings (in particular, FIGS. 4 and 5) as follows.

First, in order to measure the straightness of the shaft 5, as illustrated in FIGS. 1 and 2, the shaft 5 owned is seated in the pair of arrow seating parts 20 spaced at an interval of 28 inches apart from each other. Then, after the gauge part 33 of the measuring sensor unit 30 is adjusted to a predetermined position as a zero point, a measurer may continuously measure the spacing distance between the front end of the gauge part 33 and any outer circumferential surface of the shaft 5 while axially rotating the shaft 5, and then may evaluate the straightness of the shaft 5 by calculating the deviation value thereof.

At this time, as illustrated in FIG. 4, assuming that the spacing distance between the front end of the gauge part 33 and any portion of the outer circumferential surface of the shaft 5 (5-1) at the initial state measured by the measuring sensor unit 30 refers to "D1," and the spacing distance between it and any portion of the outer circumferential surface of the shaft 5 (5-2) continuously measured while axially rotating the shaft 5 refers to "D2," the D2 value varies according to a value of the straightness of the shaft 5, and the straightness of the shaft 5 may be determined through the deviation between the D1 and the D2 having a maximum value.

Then, in order to measure the spine of the shaft 5, as illustrated in FIG. 3, the load of the weight block 60 set to at least 880g or more is added to the shaft 5 by using the load adding part 50.

At this time, as illustrated in FIG. 5, the deflection amount of the shaft 5 (5-2) of the state where the load of the weight block 60 has been added thereto from the shaft 5 (5-1) of the state where the load of the weight block 60 has not been added thereto refers to "S," and the S that is the deflection amount measured by the measuring sensor unit 30 may be directly defined as the spine.

In addition, although not illustrated in the drawing, in the state of FIG. 5, the maximum value of the deviation values thereof may be calculated as the overlap after continuously measuring the spacing distance between any portion of the outer circumferential surface of the shaft 5 and the front end of the gauge part 33 of the measuring sensor unit 30 while axially rotating the shaft 5.

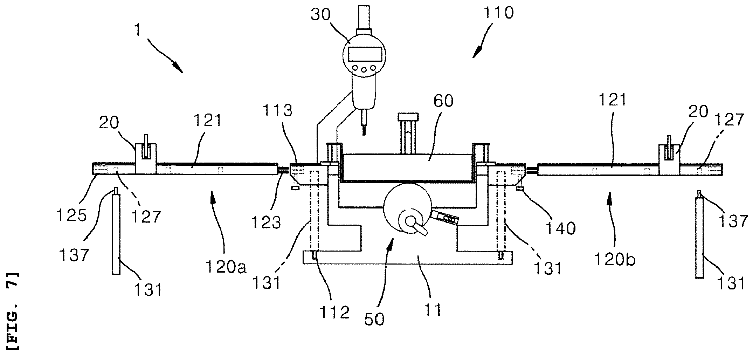

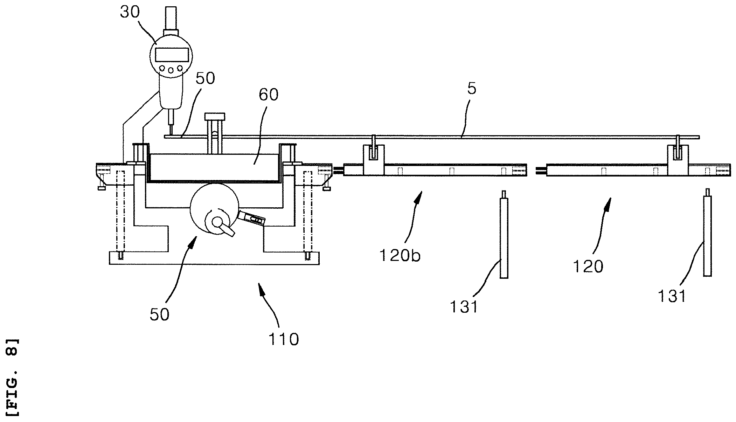

FIGS. 7 and 8 are a front exploded diagram illustrating still another embodiment of the arrow shaft test apparatus according to the present disclosure and a front diagram illustrating the use example thereof.

As illustrated in FIG. 7, in still another embodiment of the arrow shaft test apparatus according to the present disclosure, the measuring machine body 10 includes a central body 110 constituting a substantially central portion on which the measuring sensor part 30 and the weight block 60 are disposed, and wing bodies 120a, 120b provided to be separated and assembled with respect to the central body 110, and provided so that the arrow seating part 20 is slidably moved in the left and right directions, as the left and right both ends of the central body 110. Herein, the wing bodies 120a, 120b may be composed of a sliding body 121 having the guide rail 15 provided on the upper portion thereof so that the arrow seating part 20 is slidably moved.

The leg part 11 may be prepared on the lower portion of the central body 110 to firmly support the central body 110.

Meanwhile, at least one guide pin groove 113 is concavely formed on left and right both end portions of the central body 110 in the inward horizontal direction thereof, and the wing bodies 120a, 120b may be coupled horizontally through the guide pin groove 113.

More specifically, an assembling pin 123 corresponding to the number of the guide pin groove 113 may be formed to be extended and protruded horizontally on one ends of the wing bodies 120a, 120b.

The assembling pins 123 formed on the wing bodies 120a, 120b may be inserted into the guide pin grooves 113 formed on the central body 110 to firmly fix the wing bodies 120a, 120b thereto by using a fixing screw 140 provided in the central body 110 corresponding to the lower portion of the guide pin groove 113.

Meanwhile, as illustrated in FIG. 7, the arrow shaft test apparatus according to still another embodiment of the present disclosure may further include at least one supporting rod 131 for supporting the outside load of the wing bodies 120a, 120b assembled and connected to both end portions of the central body 110, respectively.

The supporting rod 131 has a supporting pin 137 with relatively small outer diameter formed on the front end portion thereof, and the lower end portions of the wing bodies 120a, 120b may have a plurality of fixing grooves 127, which are disposed to be spaced at a predetermined distance apart from each other, and concavely formed from the lower portion to the upper portion in order to insert the supporting pin 137 of the supporting rod 131 therein, formed therein.

The supporting rod 131 is stored so that the supporting pin 137 is inserted into a storing groove 112 formed on the leg part 11 of the central body 110, in the state where the wing bodies 120a, 120b have been separated from the central body 110, and when the wing bodies 120a, 120b are assembled in the central body 110, the supporting rod 131 may be used for supporting it.

As described above, it is possible for the arrow shaft test apparatus according to still another embodiment of the present disclosure to provide so that the measuring machine body 10 formed to be longer than at least the length of the shaft 5 for measuring the shaft 5 may be separated and assembled with respect to the central body 110 and the wing bodies 120a, 120b, thereby improving portability of an individual archer.

In particular, as illustrated in FIG. 8, the arrow shaft test apparatus according to still another embodiment of the present disclosure may easily measure the point (denoted by no reference number) or the nock (denoted by no reference number) portion that is both ends of the shaft 5, rather than measuring the central portion of the shaft 5 for measuring the straightness, the spine, and the overlap of the shaft 5.

That is, as illustrated in FIG. 8, it is possible to separate one 120a of the wing bodies 120a, 120b connected to one side of the central body 110 to connect it to the end portion of the other wing body 120b, and to insert and fix it to the fixing groove 127 of the position where the supporting pin 137 of the supporting rod 131 may stably support the wing bodies 120a, 120b among the plurality of fixing grooves 127, thereby easily measuring the point or the nock portion of the shaft 5 through the measuring sensor unit 30.

Meanwhile, a connecting groove 125 having the same size and depth as the guide pin groove 113 formed in the central body 110 described above so that the other wing body is connected to the wind bodies 120a, 120b of one side or the other side thereof may be formed on the end portion of the wing bodies 120a, 120b of the position opposite to the position where the assembling pin 123 has been formed.

As described above, an embodiment of the arrow shaft test apparatus according to the present disclosure has been described in detail with reference to the accompanying drawings. However, it is natural that an embodiment of the present disclosure is not necessarily limited to the above-described embodiments and various modifications and practices within the equivalent scope may be made by those skilled in the art in which the present disclosure pertains. Therefore, the true scope of the present disclosure should be determined by the claims, which will be described later.

## Claims

1. An arrow shaft test apparatus, comprising:
a measuring machine body disposed lengthily in the left and right directions;
a pair of arrow seating parts provided on the upper end of the measuring machine body, and disposed to be spaced at a predetermined distance apart from each other in the left and right directions; and
a measuring sensor unit fixed to the measuring machine body, and for measuring the spacing distance forming with any outer circumferential surface of a shaft seated in the pair of arrow seating parts.

2. The arrow shaft test apparatus of claim 1,
wherein the measuring machine body has a guide rail formed thereon so that the pair of arrow seating parts is slidably moved in the left and right directions.

3. The arrow shaft test apparatus of claim 1 or 2,
wherein the measuring machine body has a ruler attached thereto in order to determine the spacing distance between the pair of arrow seating parts.

4. The arrow shaft test apparatus of any one of claims 1 to 3,
wherein the pair of arrow seating parts comprises
a sliding block provided to be slidably moved in the left and right directions along the upper end surface of the measuring machine body; and
a pair of shaft seating plates provided in an installing groove formed in the upper portion of the sliding block, and having a rotary shaft that is horizontal in the longitudinal direction of the measuring machine body.

5. The arrow shaft test apparatus of claim 4,
wherein the pair of shaft seating plates are provided to be rotatable by an adjusting screw provided at one side thereof by a measurer.

6. The arrow shaft test apparatus of any one of the preceding claims,
wherein the measuring sensor unit includes a proximity sensor for measuring the distance between itself and any outer circumferential surface of the shaft.

7. The arrow shaft test apparatus of any one of the preceding claims,
wherein the measuring sensor unit is provided so that the weight of the shaft itself seated in the arrow seating part or the outer diameter of the shaft can be measured.

8. The arrow shaft test apparatus of any one of the preceding claims,
wherein the measuring sensor unit is configured to continuously measure the spacing distance between itself and any outer circumferential surface of the shaft while axially rotating the shaft of the state seated in the pair of arrow seating parts.

9. The arrow shaft test apparatus of any one of the preceding claims, further comprising a weight block for applying the load of a predetermined weight to any portion of the shaft seated in the pair of arrow seating parts.

10. The arrow shaft test apparatus of claim 9,
wherein the weight block has a hook part, which has a hook groove hooked on the shaft formed therein, prepared at the upside thereof.

11. The arrow shaft test apparatus of claim 9 or 10,
wherein the measuring machine body is provided thereon with a weight adding groove concavely formed to open the upside thereof so that the weight block can be vertically moved, and
wherein an elevating part is disposed in the weight adding groove for supporting the vertical movement of the weight block.

12. The arrow shaft test apparatus of claim 11,
wherein the elevating part comprises
a horizontal supporting plate in which the weight block is seated;
a guiding plate vertically bent at both ends of the horizontal plate;
a coupling plate bent outwardly and horizontally at the front end of the guiding plate; and
a vertical guide rod provided to vertically pass through the measuring machine body on the lower surface of the coupling plate.

13. The arrow shaft test apparatus of claim 11 or 12, further comprising a load adding part configured for hooking or releasing the weight block seated in the elevating part on the shaft.

14. The arrow shaft test apparatus of claim 13,
wherein the load adding part comprises:
an elevating cam having the rotary shaft horizontally passing through the measuring machine body corresponding to the lower portion of the weight adding groove, and having an outer circumferential surface having the circumference eccentric with respect to the rotary shaft;
an elevating lever extended from the rotary shaft of the elevating cam, and extended to one side thereof in order to rotate the elevating cam; and
a stopper for preventing one directional over-rotation of the elevating cam.

15. The arrow shaft test apparatus of any one of claims 9 to 14,
wherein the measuring sensor unit is adapted to measure the spacing distance between itself and any outer circumferential surface of the shaft of the state, which has been stopped in the state the load of the weight block is applied to the shaft of the state seated in the pair of arrow seating parts.

16. The arrow shaft test apparatus of any one of claims 9 to 15,
wherein the measuring sensor unit is adapted to continuously measure the spacing distance between itself and any outer circumferential surface of the shaft while axially rotating the shaft in the state the load of the weight block is applied to the shaft of the state seated in the pair of arrow seating parts.

17. The arrow shaft test apparatus of any one of the preceding claims,
wherein the measuring machine body comprises:
a central body to which the measuring machine body is coupled; and
a wing body provided on both end portions of the central body so that the arrow seating part is provided therein,
wherein the wing body is provided to be separated or assembled with respect to the central body.
